# EUROPÄISCHE PATENTSCHRIFT

(11) **EP 2 526 350 B1**
(45) Veröffentlichungstag und Bekanntmachung des Hinweises auf die Patenterteilung: **26.04.2017**
(21) Anmeldenummer: 11701487.8
(22) Anmeldetag: 18.01.2011
(51) Int. Cl.: F24J 2/52

(54) **FUNDAMENTSYSTEM FÜR SOLARPANEELE MIT VORMONTIERBAREN BESCHLAGTEILEN**
FOUNDATION SYSTEM FOR SOLAR PANELS HAVING PREASSEMBLED FITTINGS
SYSTÈME DE FONDATION POUR PANNEAUX SOLAIRES AVEC PIÈCES DE MONTAGE PRÉASSEMBLÉES

(30) Priorität: 20.01.2010 DE 202010001186 U
(43) Veröffentlichungstag der Anmeldung: 28.11.2012
(73) Patentinhaber: Krinner Innovation GmbH, 94342 Strasskirchen (DE)
(72) Erfinder: THURNER, Günther, 94342 Straßkirchen (DE)
(74) Vertreter: Leske, Thomas
(86) Internationale Anmeldenummer: PCT/EP2011/050607
(87) Internationale Veröffentlichungsnummer: WO 2011/089114

(56) Entgegenhaltungen:
- EP-A2- 0 028 982
- DE-A1-102007 052 415
- DE-A1-102009 036 607
- DE-U1- 29 703 481
- DE-U1-202008 001 010
- DE-U1-202008 015 304
- US-A- 4 754 711
- US-A1- 2009 230 265

## Beschreibung

Es ist bekannt, zur Gewinnung von Sonnenenergie, eine Vielzahl von Solarpaneelen, insbesondere beispielsweise photovoltaische Paneele, flächig nebeneinander in einer oder auch in einer Mehrzahl von langen Reihen neben- und/oder auch übereinander anzuordnen. Um eine optimale Sonneneinstrahlung zu gewährleisten, kommt es dabei darauf an, die Paneele, bzw. die aus den Paneelen gebildete Fläche derart zur Sonne auszurichten, dass über einen möglichst großen Teil des Tages ein möglichst günstiger Lichteinfall gewährleistet ist. Deshalb werden die Paneele bzw. die Paneelreihen (soweit aus Gründen der Wirtschaftlichkeit darauf verzichtet wird, sie - wie gleichfalls bekannt - der Sonne im Tagesverlauf oder gar auch im Jahresverlauf nachzuführen) in einer möglichst günstigen Neigung zur Sonne fest installiert.

Der Neigungswinkel (bezogen auf die Waagerechte) liegt - je nach geographischer Lage der Anlage - zwischen 20 und 30 Grad. In mitteleuropäischen Breiten wird vorzugsweise ein Winkel von 25 - 30 Grad vorgesehen.

Wenn die Fläche, auf der die Paneele installiert werden sollen, eine entsprechende Neigung bereits vorgibt, wie dies beispielsweise bei Dächern häufig der Fall ist, werden die Paneele beispielsweise auf Längsträgern (Pfetten) in Reihe nebeneinander, gegebenenfalls auch in mehreren Reihen übereinander auf der vorgegebenen Fläche montiert.

Wenn die vorgegebene Fläche keine geeignete Neigung zur Sonne vorgibt, etwa gar - wie häufig bei der Installation auf der Erde - in der Ebene liegt, müssen die Paneele bzw die Paneelflächen derart aufgeständert werden, dass sie die erwünschte Neigung zur Sonne einnehmen.

Dies geschieht in der Praxis in der Weise, dass die Längsträger (Pfetten), auf denen die eine oder mehreren Reihen flächig nebeneinander angeordneter Paneele gehalten sind, auf einer der Länge der einen oder mehreren Reihen von Paneelen entsprechenden Mehrzahl von Querträgern (Sparren) gelagert werden, die ihrerseits an je einem kürzeren und einem längeren Ständer derart am Untergrund gelagert werden, dass sie und mit ihnen die auf ihnen gelagerten Pfetten und die daran gelagerten Paneel-Reihen mit ihrer Oberfläche in dem gewünschten Winkel zur Sonne (auf der nördlichen Halbkugel beispielsweise in Südrichtung) geneigt sind. In dieser Weise werden beispielsweise große Felder mit solchen ein- oder mehrreihigen Paneelgruppen bestückt, deren mehrere dann wiederum (auf der nördlichen Halbkugel beispielsweise in Nord-Südrichtung) hintereinander gestaffelt aufgestellt werden.

Es versteht sich von selbst, dass dabei die Längsträger an den Querträgern festgelegt werden müssen. Wird die Anlage in der Ebene aufgestellt, so bringt dies an sich keine besonderen Probleme mit sich. Grundsätzlich müsste eine einfache Schraubverbindung, etwa aus Schraubbolzen oder Mutter, genügen. Tatsächlich kommen aber auch schon bei der Montage in der Ebene eine Reihe von Faktoren ins Spiel, die die Montage erschweren oder erheblich verzögern können, was aus Gründen der Wirtschaftlichkeit nicht hingenommen werden kann.

Dazu gehören beispielsweise Ungenauigkeiten der Fundamentierung, die bei der Montage zu Zwängungen führen können, die ausgeglichen werden müssen, was beispielsweise die Durchführung der Montage durch mehrere Helfer erforderlich machen kann. Zu berücksichtigen sind weiter die Probleme einer Montage im Winter (mit dicken Handschuhen) die eine Handhabung von Beschlagteilen erschweren, weil diese beispielsweise hinunter (in den Schnee) fallen und verloren gehen können. Dies und andere Überlegungen lassen es angezeigt erscheinen, für die Montage der Quer- an den Längsträgern schon im einfachsten Falle der Montage im ebenen Gelände ganz oder teilweise vormontierte oder vormontierbare Beschlagteile vorzusehen, die es beispielsweise auch ermöglichen, die Montage mit wenigen Handgriffen durch eine einzige Person vorzusehen.

Mit diesen Beschlagteilen sollten aus Gründen der Wirtschaftlichkeit, um nicht mehrere Arten von Beschlägen vorhalten zu müssen, nach Möglichkeit zugleich die zusätzlichen Probleme bewältigbar sein, die bei der Montage solcher Reihen von Solarpanneelen in einem Gelände mit Gefälle in Ost-Westrichtung auftreten.

In einem solchen Gelände muss die Anlage insgesamt dem Gefälle folgen, weil sonst die Ständer immer länger, damit immer aufwendiger und letztlich immer instabiler würden. Wenn aber die Anlage dem Gefälle folgt, d.h. die nebeneinander stehenden Querträger mit abfallendem Gelände immer tiefer zu stehen kommen, bzw. umgekehrt bei steigendem Gelände immer höher stehen, müssen sich auch die Längsträger dem anpassen, das heißt, sie müssen das Gefälle/die Steigung nachzeichnen.

Da die Querträger auch in diesem Falle sinnvollerweise auf senkrechten Ständern aufgeständert werden und die Querträger zumeist einen Rechteckquerschnitt aufweisen, entsteht dann eine Verkantung zwischen den Längs- und den Querträgern, die - sofern nicht besondere Vorkehrungen getroffen werden - die Befestigung erschwert oder gar die Stabilität des Systems beeinträchtigt.

Dieser Mangel ließe sich zwar dadurch ausgleichen, dass man die Profile von Querträger und Längsträger derart aneinander angleicht, dass sie auch bei geneigter Lage der Längsträger flächig aneinanderliegen. Freilich setzt dies spezielle Konstruktionen der Trägerprofile voraus, die die Verwendung von Standardprofilen ausschließen und die Fundamentsysteme entsprechend verteuern. Auch dies lässt es angezeigt erscheinen, die Probleme dieser Verbindung der Längs- und Querträger konstruktiv in einem dort vorzusehenden Beschlagteil zu lösen.

Hinzukommt, dass es für den problemlosen Aufbau großer Solaranlagen sehr darauf ankommt, dass die Längsträger (Pfetten) in der Draufsicht geradlinig und die mehreren zu einer Paneelreihe gehörigen Längsträger in absoluter Parallelität verlaufen. Denn sonst ist eine problemlose Montage der zwischen ihnen zu halternden Solarpaneele erschwert oder unmöglich oder es kommt gar zu Beschädigungen der Paneele. Um eine solche Gleichrichtung der Längsträger zu gewährleisten, werden die Querträger ihrerseits genau aufeinander ausgerichtet, so dass sie miteinander fluchten. So wird im ebenen Gelände gewährleistet, dass die Längsträger stets in gleicher Position (Ausrichtung) auf den nächstfolgenden Querträger und ihre dort vorgesehenen Lagerstellen treffen.

Wenn nun aber die Längsträger ohne besondere Vorkehrungen auf den geneigten Querträgern aufliegen und dann einem Geländegefälle folgen, also etwa nach unten oder nach oben schwenken, so schwenken sie nicht senkrecht, sondern radial um die geneigte Längsachse des Querträgers. Sie wandern also im Maße ihrer Verschwenkung aus der seitlichen Ausrichtung auf den oder die nächstfolgenden Querträger aus.

Das mag bis zu einem gewissen Grade, d.h. bei geringem Geländeabfall bzw. -Anstieg, durch entsprechende Verformung der Längsträger kompensierbar sein. Dem sind aber verhältnismäßig enge Grenzen gesetzt, weil jede Verformung der Längsträger die Gefahr in sich birgt, dass die Paneele nicht mehr zuverlässig gefasst und gehalten werden oder gar unter solche Spannung geraten, dass sie beschädigt oder zerstört werden. In jedem Falle leidet unter solchen Zwängungen aber die geradlinige Ausrichtung der Paneelfelder und damit zumindest die Optik und demzufolge die Akzeptanz des Produkts (der Anlage).

Aus DE 20 2008 015 304 U1 ist eine Montageanordnung für die Freiflächenmontage von Solarpaneele bekannt. Die Anordnung umfasst eine Mehrzahl von paarweise angeordneten Pfosten, die jeweils mit einem Sparren verbunden sind. Eine Mehrzahl von Pfetten, auf welchen die Solarpaneele angeordnet sind, ist auf mindestens einem Sparren abgestützt. Die Sparren weisen eine zumindest abschnittsweise gekrümmte Auflagefläche für die Pfetten auf.

Aus DE 10 2007 052 415 A1 ist ein Modulträger mit einer Trägerstruktur mit Einschubprofilen für mindestens ein Photovoltaikmodul bekannt. Die Einschubprofile sind mittels mehrerer Schwenklager mit dem Hauptträger verbunden. Die Schwenklager sind am Hauptträger entlang der Längsachse verschiebbar angeordnet und entsprechend dem Abstand der Einschubprofile für Photovoltaikmodule fixierbar.

Deshalb kann es sich anbieten, auch für dieses Problem eine Korrektur (der Schwenkachse der Längsträger) in einem (teil-) vormontierten oder (teil-) vormontierbaren Beschlagteil zwischen Quer- und Längsträger vorzusehen.

Die Aufgabe lautet demzufolge, ein Fundamentsystem für Solarpaneele vorzuschlagen, mit dem die einfache, kostengünstige und standsichere Montage der Längsträger in der gewünschten Ausrichtung in jedem, insbesondere auch in schwierigem Gelände, insbesondere bei einem Gefälle in Ost-WestRichtung, gewährleistet werden kann.

Diese Aufgabe löst ein Fundamentsystem gemäß Ansprüche 1-8.

Das patentgemäße Fundamentsystem für die zur Sonne geneigte Lagerung von flächig nebeneinander angeordneten Solarpaneelen, insbesondere Photovoltaik - Paneelen, besteht aus zwei oder mehr nebeneinander angeordneten Längsträgern zur flächigen Halterung einer oder mehrerer Reihen nebeneinander angeordneter Solarpaneele. Die Längsträger ruhen - je nach Länge der Reihen und demgemäß der Länge der sie haltenden Längsträger - auf einer Mehrzahl von aufeinander ausgerichteten, zur Sonne geneigten Querträgern. Die Querträger ruhen auf Stützen und sind mittels dieser Stützen in Nord-Südrichtung in dem gewünschten Winkel zur Sonne geneigt aufgeständert, so dass die an ihnen gelagerten Längsträger mit den von diesen gehaltenen Paneelen bzw Paneelflächen in derselben Neigung zur Sonne gerichtet sind.

Dabei wird, soweit es um die Montage in der Ebene, allenfalls an Hängen mit Nord-Südgefälle geht, mit Hilfe der die Querträger haltenden Ständer durch genaue, fluchtende Ausrichtung der Querträger aufeinander ein in der Draufsicht geradliniger Verlauf der dort gelagerten Längsträger und die genaue parallele Ausrichtung mehrerer Längsträger einer Paneelfläche und damit zugleich die leichte, zwängungsfreie Montage der Längsträger und der Paneele und ein harmonisches Gesamtbild der Anlage sichergestellt.

Zur einfachen Befestigung der Längsträger an den Querträgern sind ganz oder teilweise vormontierte oder vormontierbare Beschlagteile vorgesehen, die nicht erst im Gelände, etwa in Regen und Schnee, zusammengesetzt werden müssen, mit wenigen Handgriffen montierbar sind und so etwa die Montage durch einen Mann ermöglichen.

Die Beschlagteile schließen eine in Längsrichtung der Querträger verlaufende Achse ein, die eine zuverlässige Lagerung der Längs- an den Querträgern auch dann sicherstellt, wenn es - etwa in unebenem Gelände - zu Verkantungen zwischen den einander kreuzenden Längs- und Querträgern kommt.

Die Achse bzw die Achsen der mehreren für den Aufbau einer Anlage benötigten Beschlagteile können im Wesentlichen koaxial zu den Querträgern gerichtet sein. Um Schwierigkeiten zu vermeiden, die sich aus dieser Ausrichtung der Achsen ergeben, können diese auch im Wesentlichen waagerecht verlaufen.

Es hat sich nämlich gezeigt, dass die die geneigten Querträger kreuzenden Längsträger, wenn sie zum Gefälleausgleich nach unten oder nach oben um zu den Querträgern koaxiale Achsen verschwenkt werden, sich nicht in einer senkrechten Ebene und damit in Ausrichtung zum fluchtenden nächsten Querträger bzw. der dort für den Längsträger vorgesehenen Anlenkstelle (Lagerstelle) bewegen, sondern radial zum Querträger als (geneigter) Schwenkachse schwenken. Sie werden also von der vorgesehenen Anlenkstelle weg seitlich ausgelenkt. Diese Fehlauslenkung kann durch eine waagerechte oder in etwa waagerechte Ausrichtung der Achsen vermieden werden.

Damit auf der Baustelle keine oder allenfalls geringe Vorbereitungsarbeiten erforderlich werden, insbesondere nicht eine Vielzahl von Einzelteilen zusammengesetzt werden muss, sind die Beschlagteile ganz oder teilweise vormontiert oder vormontierbar ausgebildet.

Die Beschlagteile bestehen in ihrer einfachsten Form aus einem Paar von Klemmpratzen mit längsträgerseitigen Mitteln zu ihrer klemmenden Festlegung an den Längsträgern, querträgerseitigen Mitteln zu ihrer schwenkbaren und klemmenden Festlegung an den Querträgern sowie zwischen den längsträgerseitigen und den querträgerseitigen Mitteln angeordneten Zugankern, mittels derer die Klemmpratzen gegeneinander und gegen die Längsträger und die Querträger zu deren Festlegung verspannbar sind.

Dadurch dass mindestens zwei Zuganker eingesetzt werden, erhält das vormontierte Beschlagteil auch schon im Zustand der Vormontage eine solche Stabilität, insbesondere was Verkantungen angeht, dass es die Ausrichtung der für diesen Zweck zunächst noch lose miteinander verbundenen Systemkomponenten, insbesondere die Verschiebung der Längs- und der Querträger gegeneinander nicht behindert.

Um die schwenkbare Lagerung der Längsträger an den Querträgern sicherzustellen, können die Querträger querträgerseitige Teile von Schwenklagern aufweisen, in die die querträgerseitigen Mittel der Klemmpratzen zu ihrer schwenkbaren Lagerung und klemmenden Festlegung unter Bildung der Schwenkachse eingreifen können.

Die querträgerseitigen Teile der Schwenklager können als Lagerhülsen ausgebildet sein, die dann etwa mittels eines Steges an dem Querträger gelagert sind. Sie sind jedoch vorzugsweise als U-förmig gebogene Profile ausgebildet sind, die mit ihren freien Enden am Querträger festgelegt sind. Dies hat den Vorteil der sehr einfachen Bauweise aus einem einzigen entsprechend geformten Flacheisen, das außerdem - anders als ein Steg, der mittig auf dem Querträgerprofil anzubringen wäre - beidseitig mit seinen freien Enden auf den steiferen Profillängsseiten der Querträger aufgeschweißt würde, wodurch sich eine deutlich verbesserte Festigkeit und Haltbarkeit der Konstruktion ergibt.

Um einen präzisen Sitz der Klemmpratzen an dem querträgerseitigen Teil des Schwenklager (der Lagerhülse/dem U-Profil) zu gewährleisten kann ihr Sitz entsprechend, also etwa kegelstumpf- oder kugelförmig ausgebildet sein.

Besonders vorteilhaft ist die erfindungsgemäße Gestaltung, wenn die mindestens zwei Zuganker derart zwischen den längsträgerseitigen Mitteln zur klemmenden Festlegung der Klemmpratzenpaare an den Längsträgern und den querträgerseitigen Mitteln zur schwenkbaren und klemmenden Festlegung der Klemmpratzenpaare an den Querträgern und/oder dem Schwenklager positioniert sind, dass die Längsträger bei ihrem Ausrichten auf den Zugankern gleiten können. Denn dann ist der Längsträger sehr gut längenverschieblich, sofern dies zu seiner Ausrichtung nötig ist. Insbesondere stabilisiert der Längsträger dann das vormontierte Beschlagteil derart, dass Verkantungen, die den Längsträger einklemmen und seine Ausrichtung durch Verschieben behindern würden, vermieden werden.

Um den Aufbau des Systems weiter zu erleichtern sind an der Oberseite der Schwenklager bzw der querträgerseitigen Teile (Lagerhülse, U-Profil) der Schwenklager Dornfortsätze vorgesehen, die zur Führung der noch lose aufliegenden Längsträger bei deren Längsausrichtung in Längsschlitze an den Längsträgern eingreifen.

Um den Aufbau der Fundamensysteme noch weiter zu erleichtern, kann an den vormontierbaren oder vormontierten Beschlagteilen eine als Montagehilfe wirkende Haltevorrichtung vorgesehen sein, die die Beschlagteile in montagebereiter Stellung hält.

Diese Montagehilfe kann elastisch derart ausgebildet sein, dass sie im Zuge der Montage gegen ihre Rückstellkräfte elastisch verdrängbar ist. Dies kann im Falle der elastischen Ausbildung zugleich den Vorteil haben, dass die Haltevorrichtung das Beschlagteil im Falle der Demontage von selbst wieder in die (De-) Montagestellung bringt.

Die Erfindung wird im Folgenden an Hand der Zeichnungen weiter erläutert. Dabei zeigen:
- Figur 1:: ein in perspektivischer Sicht wiedergegebenes Fundamentsystem (1) für die zur Sonne geneigte Lagerung von flächig nebeneinander angeordneten Solarpaneelen (2).
- Figur 2:: das Fundamentsystem (1) nach Figur 1 in Seitenansicht.
- Figur 3:: ein erfindungsgemäßes Beschlagteil (10) mit als Lagerhülse ausgebildetem querträgerseitigem Schwenklager (15) in perspektivischer Darstellung.
- Figur 4:: Das Beschlagteil nach Figur 3 im Schnitt.
- Figur 5:: Das Beschlagteil nach Figur 3 in Seitenansicht
- Figur 6:: Das Beschlagteil nach Figur 3 in axialer Draufsicht
- Figur 7:: ein erfindungsgemäßes Beschlagteil (10) mit als U-förmiges Profil (16) ausgebildetem querträgerseitigem Teil des Schwenklagers (15) in perspektivischer Darstellung.
- Figur 8:: Das Beschlagteil (10) nach Figur 7 in axialer Draufsicht.
- Figur 9:: Das Beschlagteil (10) nach Figur 7 in Draufsicht
- Figur 10:: Das Beschlagteil (10) nach Figur 7 in Seitenansicht

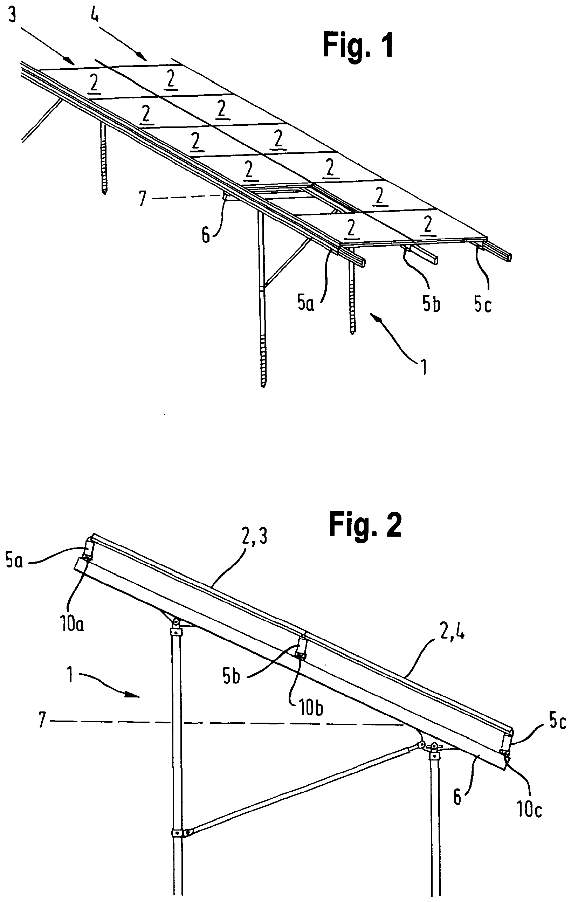

Figur 1 zeigt in perspektivischer Sicht das Fundamentsystem 1 für die zur Sonne geneigte Lagerung von flächig nebeneinander in einer oder mehreren Reihen 3, 4 angeordneten Solarpaneelen 2, die von Längsträgern 5 a - c gehalten und mittels der Längsträger an Querträgern 6 gelagert sind, die ihrerseits von senkrechten Ständern zur Lagerung auf dem Untergrund gehalten werden.

Figur 2 zeigt das Fundamentsystem 1 nach Figur 1 in Seitenansicht. Es besteht aus zwei Reihen 3, 4 von Solarpaneelen 2, die von Längsträgern 5 a - c gehalten sind, die auf in ihrer Längsrichtung 7 zur Sonne geneigten Querträgern 6 ruhen, die ihrerseits von den senkrechten Ständern getragen werden.

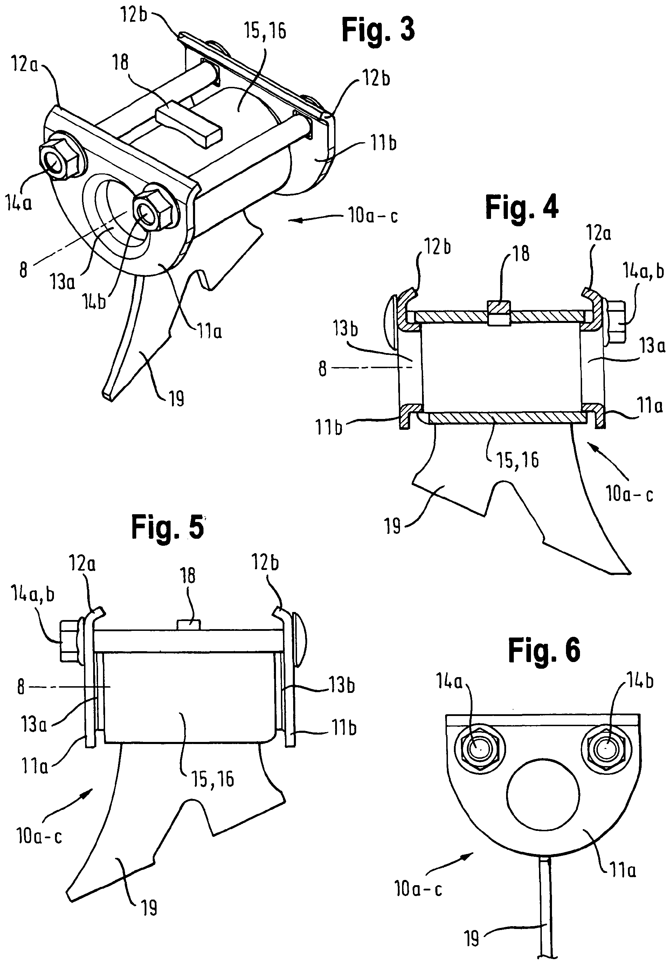

Figur 3 zeigt ein Beschlagteil 10 mit einem Paar von Klemmpratzen 11 a, b mit Mitteln 12 a, b zur längsträgerseitigen, Mitteln 13 a, b zur querträgerseitigen Festlegung der Pratzen 11 a, b sowie zwei Zugankern 14a, b zur Verspannung der Klemmpratzen 11 a, b gegeneinander und mit den (nicht gezeigten) Längs- und Querträgern 5, 6. Gezeigt ist weiter ein als Lagerhülse 16 ausgebildetes querträgerseitiges Teil eines Schwenklager 15, das mittels eines Steges 19 an einem (nicht dargestellten) Querträger 6 festlegbar, etwa verschweißbar ist. Die Klemmpratzen 11 a, b greifen mit ihren querträgerseitigen Mitteln 13 a, b unter Bildung einer Schwenkachse 8 in die Lagerhülse 16 ein. Gezeigt ist auch ein Dornfortsatz 18, der zur Führung und Ausrichtung eines auf das Beschlagteil 10 bzw. auf die Zuganker 14 a, b lose aufgelegten (nicht gezeigten) Längsträgers 5 in einen an letzterem vorgesehenen Längsschlitz eingreifen kann.

Figur 4 zeigt das Beschlagteil 10 nach Figur 3 in Seitenansicht mit Klemmpratzen 11 a, b, Mitteln 12 a, b zur längsträgerseitigen und Mitteln 13 a, b zur querträgerseitigen Festlegung der Pratzen 11 a, b, zwei Zugankern 14a, b zur Verspannung der Klemmpratzen 11 a, b gegeneinander und mit den (nicht gezeigten) Längs- und Querträgern 5, 6. Gezeigt ist weiter ein als Lagerhülse 16 ausgebildetes querträgerseitiges Teil eines Schwenklager 15, das mittels eines Steges 19 an einem (nicht dargestellten) Querträger 6 festlegbar, etwa verschweißbar ist. Die Klemmpratzen 11 a, b greifen mit ihren querträgerseitigen Mitteln 13 a, b unter Bildung einer Schwenkachse 8 in die Lagerhülse 16 ein. Gezeigt ist auch der Dornfortsatz 18, der zur Führung und Ausrichtung eines auf das Beschlagteil 10 bzw. auf die Zuganker 14 a, b lose aufgelegten (nicht gezeigten) Längsträgers 5 in einen an letzterem vorgesehenen Längsschlitz eingreifen kann.

Figur 5 zeigt das Beschlagteil 10 nach Figur 3 in Seitenansicht mit Klemmpratzen 11 a, b, Mitteln 12 a, b zur längsträgerseitigen und Mitteln 13 a, b zur querträgerseitigen Festlegung der Pratzen 11 a, b, Zugankern 14 a, b zur Verspannung der Klemmpratzen 11 a, b gegeneinander und mit den (nicht gezeigten) Längs- und Querträgern 5, 6. Gezeigt ist weiter ein als Lagerhülse 16 ausgebildetes, querträgerseitiges Teil des Schwenklagers 15, das mittels eines Steges 19 an einem (nicht dargestellten) Querträger 6 festlegbar, etwa verschweißbar ist. Die Klemmpratzen 11 a, b greifen mit ihren querträgerseitigen Mitteln 13 a, b unter Bildung einer Schwenkachse 8 in die Lagerhülse 16 ein. Gezeigt ist auch der Dornfortsatz 18, der zur Führung und Ausrichtung eines auf das Beschlagteil 10 bzw. auf die Zuganker 14 a, b lose aufgelegten (nicht gezeigten) Längsträgers 5 in einen an letzterem vorgesehenen Längsschlitz eingreifen kann.

Figur 6 zeigt das Beschlagteil 10 nach Figur 3 in axialer Draufsicht mit einer Klemmpratze 11 und Zugankern 14 a, b.

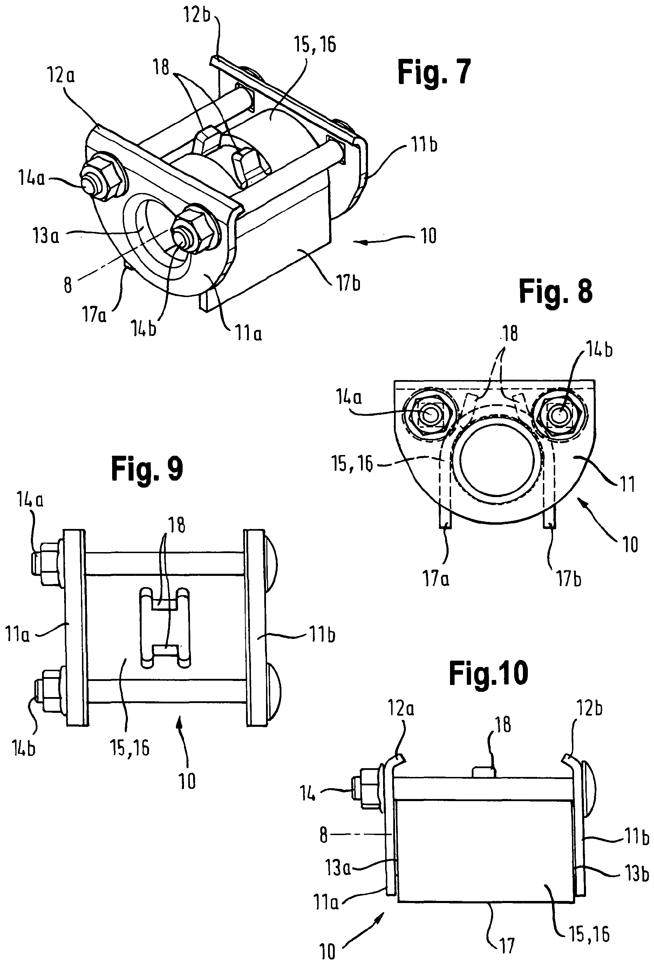

Figur 7 zeigt ein anderes Beschlagteil 10 mit einem Paar von Klemmpratzen 11 a, b mit Mitteln 12 a, b zur längsträgerseitigen und Mitteln 13 a, b zur querträgerseitigen Festlegung der Pratzen 11 a, b, sowie zwei Zuganker 14a, b zur Verspannung der Klemmpratzen 11 a, b gegeneinander und mit den (nicht gezeigten) Längs- und Querträgern 5, 6. Gezeigt ist weiter ein als U-Profil 16 ausgebildetes querträgerseitiges Teil eines Schwenklager 15, das mit seinen freien Enden 17 a, b an einem (nicht dargestellten) Querträger 6 festlegbar, etwa verschweißbar ist. Die Klemmpratzen 11 a, b greifen mit ihren querträgerseitigen Mitteln 13 a, b unter Bildung einer Schwenkachse 8 in das U-Profil 16 ein. Gezeigt ist auch ein Dornfortsatz 18, der zur Führung und Ausrichtung eines auf das Beschlagteil 10 bzw. auf die Zuganker 14 a, b lose aufgelegten (nicht gezeigten) Längsträgers 5 in einen an letzterem vorgesehenen Längsschlitz eingreifen kann.

Figur 8 zeigt das Beschlagteil 10 nach Figur 7 in axialer Draufsicht mit einer Klemmpratze 11, Zugankern 14 a, b, als U-Profil 16 ausgebildetem querträgerseitigem Teil des Schwenklagers 15 mit an einem (nicht gezeigten) Querträger 6 festlegbaren, etwa verschweißbaren freien Enden 17 a, b.

Figur 9 zeigt das Beschlagteil 10 nach Figur 7 in Draufsicht mit Klemmpratzen 11 a, b, Zugankern 14 a, b, querträgerseitigem Teil 16 des Schwenklagers 15 als U-Profil 16 und Dornfortsatz 18 zur Führung eines (nicht gezeigten) Längsträgers 5.

Figur 10 zeigt das Beschlagteil 10 nach Figur 7 in Seitenansicht mit Klemmpratzen 11 a, b mit Mitteln 12 a, b zur längsträgerseitigen und Mitteln 13 a, b zur querträgerseitigen Festlegung der Pratzen 11 a, b, einen der Zuganker 14a, b zur Verspannung der Klemmpratzen 11 a, b gegeneinander und mit den (nicht gezeigten) Längs- und Querträgern 5, 6. Gezeigt ist weiter ein als U-Profil 16 ausgebildetes, querträgerseitiges Teil 16 des Schwenklagers 15, das mittels seiner freien Enden 17 an einem (nicht dargestellten) Querträger 6 festlegbar, etwa verschweißbar ist. Die Klemmpratzen 11 a, b greifen mit ihren querträgerseitigen Mitteln 13 a, b unter Bildung einer Schwenkachse 8 in das U-Profil 16 ein. Gezeigt ist auch der Dornfortsatz 18, der zur Führung und Ausrichtung eines auf das Beschlagteil 10 bzw auf die Zuganker 14 a, b lose aufgelegten (nicht gezeigten) Längsträgers 5 in einen an letzterem vorgesehenen Längsschlitz eingreifen kann.

### Bezugszeichen:

- 1: Fundamentsystem
- 2: Solarpanneel
- 3, 4: Reihen von Solarpanneelen
- 5 a-c: Längsträger
- 6: Querträger
- 7: Längsrichtung der Querträger
- 8 a-c: Achsen
- 10 a-c: Beschlagteile
- 11 a, b: Paare von Klemmpratzen
- 12 a, b: längsträgerseitige Mittel
- 13 a, b: querträgerseitige Mittel
- 14 a, b: Zuganker
- 15: Schwenklager
- 16: Längsträgerseitiger Teil der Schwenklager 15 Lagerhülse / U-förmiges Profil
- 17 a, b: Freie Enden der U-förmigen Profile
- 18: Dornfortsätze
- 19: Steg

## Patentansprüche

1. Fundamentsystem (1) zur Lagerung von flächig nebeneinander angeordneten Solarpaneelen (2), umfassend:
Längsträger (5a-c), eine Mehrzahl von Querträgern (6) und Beschlagteile (10a-c) wobei die Solarpaneele in einer oder mehreren Reihen (3, 4) nebeneinander von den Längsträgern (5a - c) gehalten werden,
wobei die Längsträger (5a-c) auf der Mehrzahl von nebeneinander angeordneten, bezüglich einer Waagerechten geneigten Querträgern (6) ruhen,
wobei die Längsträger (5 a - c) an den Querträgern (6) um in Längsrichtung (7) der Querträger (6) im Wesentlichen koaxial oder im Wesentlichen waagerecht verlaufende Achsen (8a - c) schwenkbar lagerbar sind,
**dadurch gekennzeichnet, dass**
die Achsen an den ganz oder teilweise vormontierten oder vormontierbaren Beschlagteilen (10 a - c) zur Befestigung der Längsträger (5 a - c) an den Querträgern (6) ausgebildet sind, wobei die Beschlagteile (10 a - c) Paare von Klemmpratzen (11 a, b) mit längsträgerseitigen Mitteln (12 a, b) zu ihrer klemmenden Festlegung an den Längsträgern (5 a - c), querträgerseitigen Mitteln (13 a, b) zu ihrer schwenkbaren und klemmenden Festlegung an den Querträgern (6),
sowie zwischen den längsträgerseitigen (12 a, b) und den querträgerseitigen Mitteln (13 a, b) angeordnete Zuganker (14 a, b) aufweisen, mittels derer die Klemmpratzen gegeneinander und gegen die Längsträger (5 a - c) und die Querträger (6) verspannbar sind.

2. Fundamentsystem (1) nach Anspruch 1, **dadurch gekennzeichnet, dass** die Querträger (6) querträgerseitige Teile (16) von Schwenklagern (15) aufweisen, in die die querträgerseitigen Mittel (13 a, b) der Klemmpratzen (11 a, b) zu ihrer schwenkbaren Lagerung und klemmenden Festlegung unter Bildung der Schwenkachse (8a - c) eingreifen.

3. Fundamentsystem (1) nach einem der vorhergehenden Ansprüche, **dadurch gekennzeichnet, dass** die querträgerseitigen Teile (16) der Schwenklager (15) als U-förmig gebogene Profile (16) ausgebildet sind, die mit ihren freien Enden (17a, b) am Querträger (6) festgelegt sind.

4. Fundamentsystem (1) nach Anspruch 2 oder 3, **dadurch gekennzeichnet, dass** der Sitz der Klemmpratzen (11 a, b) an den querträgerseitigen Teilen 16 (Lagerhülsen, U-Profilen) der Schwenklager (15) kegelstumpf- oder kugelartig ausbildet ist.

5. Fundamentsystem (1) nach einem der vorigen Ansprüche, **dadurch gekennzeichnet, dass** die Zuganker (14 a, b) derart zwischen den längsträgerseitigen Mitteln (12 a, b) zur klemmenden Festlegung der Klemmpratzenpaare (11 a, b) an den Längsträgern (5 a - c), und den querträgerseitigen Mitteln (13 a, b) zur schwenkbaren und klemmenden Festlegung der Klemmpratzenpaare (11 a, b) an den Querträgern (6) und/oder dem Schwenklager (15, 16) positioniert sind, dass die Längsträger (5 a - c) bei ihrem Ausrichten auf den Zugankern (14 a, b) gleitbar lagerbar sind.

6. Fundamentsystem (1) nach einem der Ansprüche 2 - 5, **dadurch gekennzeichnet, dass** die querträgerseitigen Teile/Lagerhülsen/U-Profile (16) der Schwenklager (15) Dornfortsätze (18) aufweisen, die zur Führung der Längsträger (5 a - c) bei deren Längsausrichtung in Längsschlitze an den Längsträgern (5 a - c) eingreifen.

7. Fundamentsystem (1) nach einem der vorigen Ansprüche, **dadurch gekennzeichnet, dass** die vormontierbaren oder vormontierten Beschlagteile (10 a - c) mittels einer als Montagehilfe wirkenden Haltevorrichtung in montagebereiter Stellung gehalten werden.

8. Fundamentsystem (1) nach Anspruch 7, **dadurch gekennzeichnet, dass** die als Montagehilfe wirkende Haltevorrichtung elastisch derart ausgebildet ist, dass sie im Zuge der Montage gegen ihre Rückstellkräfte elastisch verdrängbar ist.

## Claims

1. Foundation system (1) for supporting solar panels (2) which are arranged in a sheetlike manner next to one another, comprising:
longitudinal members (5a-c), a plurality of crossmembers (6) and fittings (10a-c),
wherein the solar panels are held next to one another in one or more rows (3, 4) by the longitudinal members (5a-c),
wherein the longitudinal members (5a-c) rest on the plurality of crossmembers (6), which are arranged next to one another and are inclined with respect to a horizontal,
wherein the longitudinal members (5a-c) can be mounted pivotably on the crossmembers (6) about axes (8a-c) running substantially coaxially or substantially horizontally in the longitudinal direction (7) of the crossmembers (6),
**characterized in that** the axes are formed on the entirely or partially preassembled or preassemblable fittings (10a-c) for fastening the longitudinal members (5a-c) on the crossmembers (6),
wherein the fittings (10a-c) have pairs of clamping claws (11a, b), with longitudinal-member-side means (12a, b) for the clamping fixing of said clamping claws on the longitudinal members (5a-c),
with crossmember-side means (13a, b) for the pivotable and clamping fixing of said clamping claws on the crossmembers (6),
and with tie rods (14a, b) which are arranged between the longitudinal-member-side means (12a, b) and the crossmember-side means (13a, b) and by means of which the clamping claws can be braced in relation to one another and against the longitudinal members (5a-c) and the crossmembers (6) .

2. Foundation system (1) according to Claim 1, **characterized in that** the crossmembers (6) have crossmember-side parts (16) of pivot bearings (15), in which the crossmember-side means (13a, b) of the clamping claws (11a, b) engage for the pivotable mounting and clamping fixing thereof, with the pivot axis (8a-c) being formed.

3. Foundation system (1) according to either of the preceding claims, **characterized in that** the crossmember-side parts (16) of the pivot bearings (15) are designed as profiles (16) which are bent in a U-shaped manner and are fixed at the free ends (17a, b) thereof to the crossmember (6).

4. Foundation system (1) according to Claim 2 or 3, **characterized in that** the seat of the clamping claws (11a, b) on the crossmember-side parts (16) (bearing sleeves, U profiles) of the pivot bearings (15) is designed in the manner of a truncated cone or a ball.

5. Foundation system (1) according to one of the preceding claims, **characterized in that** the tie rods (14a, b) are positioned between the longitudinal-member-side means (12a, b) for the clamping fixing of the clamping claw pairs (11a, b) on the longitudinal members (5a-c) and the
crossmember-side means (13a, b) for the pivotable and clamping fixing of the clamping claw pairs (11a, b) on the crossmembers (6) and/or the pivot bearing (15, 16)
in such a manner that the longitudinal members (5a-c) are mountable in a slidable manner upon being aligned with the tie rods (14a, b).

6. Foundation system (1) according to one of Claims 2-5, **characterized in that** the crossmember-side parts/bearing sleeves/U profiles (16) of the pivot bearings (15) have spike extensions (18) which, for guiding the longitudinal members (5a-c) upon the longitudinal alignment thereof, engage in longitudinal slots on the longitudinal members (5a-c).

7. Foundation system (1) according to one of the preceding claims, **characterized in that** the preassemblable or preassembled fittings (10a-c) are held in a position ready for installation by means of a holding device acting as an installation aid.

8. Foundation system (1) according to Claim 7, **characterized in that** the holding device acting as an installation aid is designed to be elastic so as to be elastically displaceable counter to the resetting forces thereof during the course of the installation.

## Revendications

1. Système de fondation (1) pour le support de panneaux solaires (2) disposés à plat les uns à côté des autres, comprenant :
des longerons (5a-c), une pluralité de traverses (6) et des parties de ferrure (10a-c), les panneaux solaires étant retenus dans une ou plusieurs rangées (3, 4) les uns à côté des autres par les longerons (5a-c), les longerons (5a-c) reposant sur la pluralité de traverses (6) disposées les unes à côté des autres, inclinées par rapport à l'horizontale, les longerons (5a-c) pouvant être supportés sur les traverses (6) de manière à pouvoir pivoter autour d'axes (8a-c) s'étendant essentiellement coaxialement ou essentiellement horizontalement dans la direction longitudinale (7) des traverses (6),
**caractérisé en ce que**
les axes sont réalisés sur les parties de ferrure (10a-c) prémontées ou pouvant être prémontées complètement ou en partie pour la fixation des longerons (5a-c) aux traverses (6), les parties de ferrure (10a-c) présentant des paires de brides de serrage (11a, b) avec des moyens (12a, b) latéraux aux longerons pour leur fixation par serrage aux longerons (5a-c), des moyens (13a, b) latéraux aux traverses pour leur fixation pivotante et par serrage aux traverses (6), ainsi que des tirants d'ancrage (14a, b) disposés entre les moyens (12a, b) latéraux aux longerons et les moyens (13a, b) latéraux aux traverses, au moyen desquels les brides de serrage peuvent être serrées les unes contre les autres et contre les longerons (5a-c) et les traverses (6).

2. Système de fondation (1) selon la revendication 1, **caractérisé en ce que** les traverses (6) présentent des parties (16) de paliers pivotants (15), latérales aux traverses, dans lesquelles viennent en prise les moyens (13a, b) des brides de serrage (11a, b) latéraux aux traverses, en vue de leur support pivotant et de leur fixation par serrage en formant l'axe de pivotement (8a-c).

3. Système de fondation (1) selon l'une quelconque des revendications précédentes, **caractérisé en ce que** les parties (16) des paliers pivotants (15), latérales aux traverses, sont réalisées sous forme de profilés cintrés en forme de U (16) qui sont fixés par leurs extrémités libres (17a, b) à la traverse (6).

4. Système de fondation (1) selon la revendication 2 ou 3, **caractérisé en ce que** le siège des brides de serrage (lia, b) est réalisé en forme de tronc de cône ou sous forme de sphère au niveau des parties (16) latérales aux traverses (douilles de palier, profilés en U), des paliers pivotants (15).

5. Système de fondation (1) selon l'une quelconque des revendications précédentes, **caractérisé en ce que** les tirants d'ancrage (14a, b) sont positionnées entre les moyens (12a, b) latéraux aux longerons, en vue de la fixation par serrage des paires de brides de serrage (11a, b) aux longerons (5a-c), et les moyens (13a, b) latéraux aux traverses, pour la fixation pivotante et par serrage des paires de brides de serrage (11a, b) aux traverses (6) et/ou au palier pivotant (15, 16), de telle sorte que les longerons (5a-c) puissent être supportés de manière à pouvoir coulisser lors de leur orientation sur les tirants d'ancrage (14a, b).

6. Système de fondation (1) selon l'une quelconque des revendications 2 à 5, **caractérisé en ce que** les parties/douilles de palier/profilés en U (16), latérales aux traverses, des paliers pivotants (15), présentent des saillies de mandrin (18) qui, pour le guidage des longerons (5a-c), viennent en prise lors de leur orientation longitudinale dans des fentes longitudinales sur les longerons (5a-c).

7. Système de fondation (1) selon l'une quelconque des revendications précédentes, **caractérisé en. ce que** les parties de ferrure (10a-c) prémontables ou prémontées sont retenues au moyen d'un dispositif de retenue agissant en tant qu'auxiliaire de montage dans la position prête au montage.

8. Système de fondation (1) selon la revendication 7, **caractérisé en ce que** le dispositif de retenue agissant en tant qu'auxiliaire de montage est réalisé sous forme élastique de telle sorte qu'il puisse être comprimé élastiquement au cours du montage à l'encontre de sa force de rappel.
